# EUROPEAN PATENT SPECIFICATION

(11) **EP 2 604 413 B1**
(45) Date of publication and mention of the grant of the patent: **25.02.2015**
(21) Application number: 11193118.4
(22) Date of filing: 12.12.2011
(51) Int. Cl.: B29C 70/44, B29C 70/54

(54) **Multi-layered sheet for vacuum infusion moulding and process using said multi-layered shhet**
Mehrschichtiges Blech für das Vakuum-Resin-Infusion-Molding und Verfahren bei dem dieses Blech benutzt wird.
Feuille multi-couche pour moulage par infusion de résine sous vide et procédé utilisant cette feuille multi-couche-

(43) Date of publication of application: 19.06.2013
(73) Proprietor: Stevik SAS, 75116 Paris (FR); AeroComposit Joint Stock Company, Moscow 125284 (RU)
(72) Inventor: Ruppel, Viktoria, 75116 Paris (FR); Lebas Stéphane, 75116 Paris (FR); Gaydanskiy, Anatoliy, 125284 Moscow (RU); Tretyakov, Andrey, 125284 Moscow (RU); Gromashev Andrey, 125284 Moscow (RU); Ulyanov Alexey, 125284 Moscow (RU)
(74) Representative: Meitinger, Thomas Heinz

(56) References cited:
- FR-A1- 2 868 008
- FR-A1- 2 870 861
- US-A1- 2003 025 232
- US-A1- 2005 040 553

## Description

### INTRODUCTION

This invention relates to a multi-layered sheet for vacuum infusion moulding. More particularly, this invention relates to a multi-layered sheet for vacuum infusion moulding which can be used as a cover in vacuum infusion moulding for the production of fibre-reinforced composite materials. Furthermore, the invention relates to the usage of such a multi-layered sheet together with a further multi-layered sheet.

### BACKGROUND TO THE INVENTION

Fibre-reinforce composite materials are well known in the art. Many endeavours have been made in order to allow an efficient production of large scale products. For example, vacuum assisted moulding processes are known in which fibre material is covered by a suitable material. The cover is filled with wet resin through a first nozzle, which is located on one side of the bag. After applying a vacuum inside the cover through a second nozzle on an opposite side, the laminate product is covered by the wet resin. In order to achieve wet resins, the process allows heating so that the resin is in a liquid state.

This process, however, has some disadvantages associated inherently to it. For example, the resin follows the path between the first nozzle and the second nozzle, which sometimes results in unequal coverage of the laminate product. Furthermore, the resin flow also creates friction with the fibres of the laminate product, which may lead to undesired alterations of the product shape.

US 2003/0025232 A1 discloses a multi-layered sheet for vacuum infusion molding according to the preamble of claim 1 and a vacuum infusion molding method using said multi-layered sheet.

The inventors have accordingly found a need in the art to provide a replacement for the covers as known in the art in order to achieve better results during vacuum moulding.

### SUMMARY OF THE INVENTION

According to the invention, there is provided a multi-layered sheet for vacuum infusion moulding according to claim 1.

According to a further embodiment of the invention, the second temperature is selected between 100°C and 150°C, preferably at around 120°C.

According to a further embodiment of the invention, the middle layer is fabricated from modificated Poyethylene.

According to a further embodiment of the invention, the middle layer is provided with a thickness between 10 µm to 100 µm, preferably around 30µm.

According to a further embodiment of the invention, the top layer is fabricated as a mesh.

According to a further embodiment of the invention, the top layer is fabricated from Polyester or modified Polyester.

According to a further embodiment of the invention, the top layer is provided with a thickness between 10 µm to 2000 µm, preferably around 700 µm.

According to a further embodiment of the invention, the first and the second adhesive layer are respectively provided as synthetic rubber glue net.

According to a further embodiment of the invention, the bottom layer is fabricated from polyester with a thickness between 10 µm and 300 µm, preferably around 150 µm.

According to claim 13, a vacuum infusion molding process using the multi-layered sheet of claim 1 and a further multi-layered sheet is provided. The further multi-layered sheet comprises a three layer stack with a peeling layer, a third adhesive layer and a resin impermeable membrane layer.

The peeling layer may be fabricated from polyester having a thickness between 10 µm and 300 µm, preferably around 150 µm.

The membrane layer may be fabricated from Polyester having a thickness between 50 and 500 µm, preferably around 200 µm.

### DETAILED DESCRIPTION OF THE INVENTION

The invention will now be described in greater detail by way of example with reference to the following drawing in which:
Figure 1 shows a cross sectional view of a multi-layered sheet according to an embodiment of the invention;
Figure 2 shows a detail of the middle stack in the multi-layered sheet of the embodiment according to Figure 1 in a top view; and
Figure 3 shows a cross sectional view of a second multi-layered sheet according to a further embodiment of the invention.

In the drawing, alike reference numerals refer to alike parts, unless otherwise indicated.

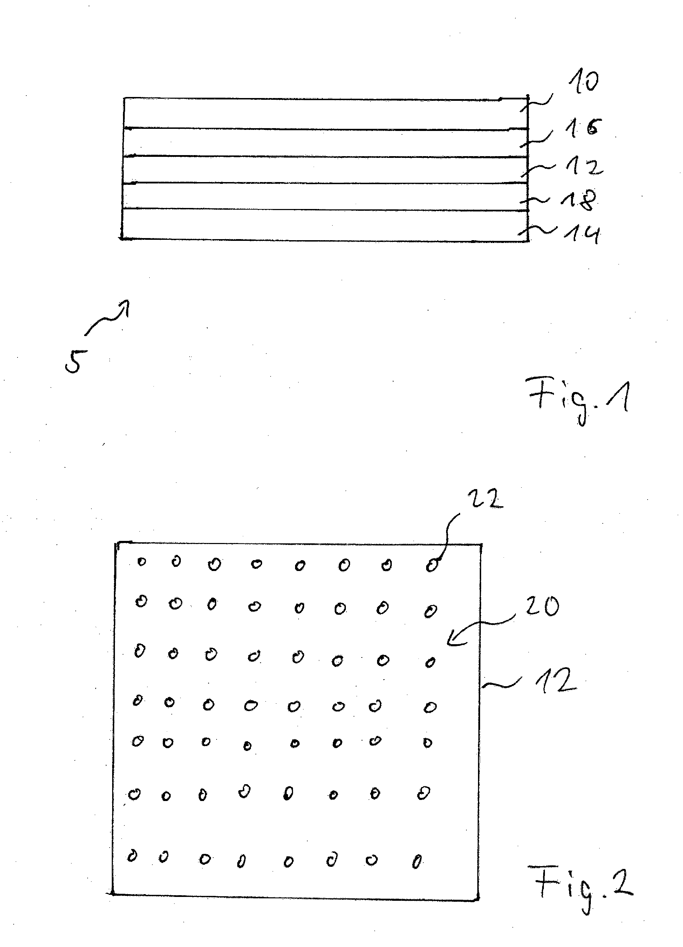

Referring now to Figure 1 in particular, the invention embodied therein comprises a multi-layered sheet generally designated with reference numeral 5, which is shown in a cross sectional side view.

The multi-layered sheet 5 includes a stack of different layers. As shown in Figure 1, a top layer 10, a middle layer 12 and a bottom layer 14 are present. Furthermore, a first adhesion layer 16 connects the top layer 10 and the middle layer 12 and a second adhesion layer 18 connects the middle layer 12 and the bottom layer 14.

The top layer 10 is fabricated as a mesh or any other woven structure, for example using Polyester or a modified Polyester. The top layer 10 may have a thickness between 10 µm to 2000 µm, preferably around 700 µm. The purpose of the top layer 10 is the capability of absorbing the liquid resin, which can be applied to the top layer 10.

The middle layer 12 is capable of blocking the liquid resin at a first temperature. The first temperature is in a range wherein the resin is in its liquid state. As most resins are liquid either from room temperature on or above a specific temperature, the first temperature is selected according to the characteristics of the resin and can be around 90°C, for example. More generally, it would be in a range from approximately 20°C to 100°C. The middle layer 12 is fabricated from Polyethylene or a modified Polyethylene, for example. The middle layer 12 is provided with a thickness between 10 µm to 100 µm, preferably around 30 µm.

The bottom layer 14 is fabricated from Polyester with a thickness between 10 µm and 300 µm, preferably around 150 µm. The function of the bottom layer 14 is that it facilitates the release of the multi-layered sheet 5 from a laminate in the vacuum moulding process. The bottom layer 14 of the multi-layered sheet 5 is fabricated as a mesh structure or any other woven structure.

The top layer 10 and the middle layer 12 are connected to each other by means of a first adhesive layer 16. The middle layer 12 and the bottom layer 14 are connected to each other by means of a second adhesive layer 18. The first adhesive layer 16 and the second adhesive layer 18 are respectively provided as synthetic rubber glue sheets being formed as a mesh or any other woven structure.

As mentioned above, the liquid resin can penetrated through the middle layer 12 at the second temperature. This is achieved by providing the middle layer 12 with a melting point which corresponds to the second temperature. For example, the middle layer 12 can have a melting point at approximately 120°C.

All individual layers of the multi-layered sheet 5 are permeable to air. This is an important feature as otherwise any application of the multi-layered sheet 5 in a vacuum moulding process would be impossible. The top layer 10 and the bottom layer 14 achieve this by their mesh structure. The first adhesive layer 16 and the second adhesive layer 18 are also permeable to air due to their mesh structure. The middle layer 12 is permeable to air by means of a perforation.

The perforation 20 of the middle layer 12 is shown in more detail in Figure 2. The perforation 20 is formed as a regular pattern although other patterns could be used as well. The diameter of the individual holes 22 of the perforation 20 are selected such that liquid resin can not penetrate through the middle layer 12. For example, the diameter of the individual holes 22 can be below 100 µm. It is to be appreciated that the diameter of the holes 22 will depend on the characteristics of the resin used and can be adapted accordingly.

The multi-layered sheet 5 is permeable to air and controllable such that in a first state the liquid resin is blocked from transmission through the multi-layered sheet 5 and that in a second state the liquid resin is at least partially penetrable through multi-layered sheet 5. The first state corresponds to the first temperature at which the resin is liquid. The second state corresponds to the second temperature being above the first temperature at which the middle layer 12 starts to melt. Due to the perforation 20, this melting process does not occur at arbitrary positions but starts around the holes 22, which accordingly become widened and therefore start to become penetrable for the liquid resin. The first temperature and the second temperature can be varied according to the properties of the resin and the material of the middle layer 12.

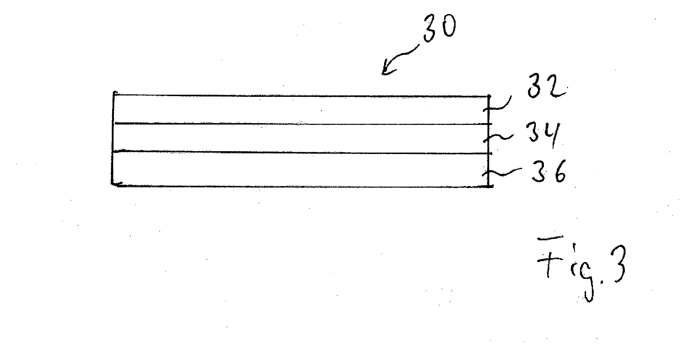

In Figure 3, a further multi-layered sheet 30 is shown. The further multi-layered sheet 30 can be used with the multi-layered sheet 5 according to Figure 1 in a vacuum moulding process. The further multi-layered sheet includes a three layer stack with a peeling layer 32, a third adhesive layer 34 and a resin impermeable membrane layer 36. The peeling layer 32 is similar to the bottom layer 14 as described above and can be fabricated from Polyester having a thickness between 10 µm and 300 µm, preferably around 150 µm. The third adhesive layer 34 is similar to the first adhesive layer 16 and the second adhesive layer 18. The membrane layer 36 can be fabricated from Polyester having a thickness between 50 and 500 µm, preferably around 200 µm. The membrane layer 36 is impermeable by the liquid resin.

The further multi-layered sheet 30 together with the multi-layered sheet 5 can be used in a vacuum moulding process in the following manner. The further multi-layered sheet 30 is placed under the manufacturing part. The multi-layered sheet 5 is placed above laminate product with the bottom layer 14 facing the product.

Although certain embodiments only of the invention have been described herein, it will be understood by any person skilled in the art that other modifications, variations, and possibilities of the invention are possible.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

## Claims

1. A multi-layered sheet (5) for vacuum infusion moulding comprising
a layer stack being permeable to air and controllable such that in a first state a liquid resin is blocked from transmission through the layer stack and that in a second state the liquid resin is at least partially penetrable through the layer stack, wherein the first state corresponds to a first temperature and the second state corresponds to a second temperature being above the first temperature;
the layer stack including a middle layer (12) having perforation holes (22);
wherein the perforation holes (22) are provided with a diameter which is small enough so that below the second temperature the liquid resin is barred from penetrating through the middle layer;
wherein the layer stack further includes a top layer (10) being capable of absorbing the liquid resin, a bottom layer (14) being capable of facilitating a release of the multi-layered sheet (5), **characterized in that** the middle layer (12) has a melting point which corresponds to the second temperature, wherein at the second temperature the melting process of the middle layer (12) starts around the perforation holes causing the perforation holes to widen and allowing penetration of the liquid resin through the middle layer, and **in that** the layer stack further includes a first adhesion layer (16) that connects the top layer (10) with the middle layer (12), and a second adhesion layer (18) that connects the middle layer (12) with the bottom layer (14).

2. The multi-layered sheet (5) according to claim 1, wherein the perforation holes (22) are arranged in a regular pattern.

3. The multi-layered sheet (5) according to claim1 or 2, wherein the diameter of the individual perforation holes (22) is below 100 µm.

4. The multi-layered sheet (5) according to any of claims 2 to 3, wherein the permeability of the middle layer (12) to air is achieved by the perforation holes (22).

5. The multi-layered sheet (5) according to any of claims 1 to 4, wherein the second temperature is selected between 100°C and 150°C, preferably at around 120°C.

6. The multi-layered sheet (5) according to any of claims 2 to 5, wherein the middle layer (12) is fabricated from Polyethylene or modified Polyethylene.

7. The multi-layered sheet (5) according to any of claims 2 to 6, wherein the middle layer (12) is provided with a thickness between 10 µm to 100 µm, preferably around 30µm.

8. The multi-layered sheet (5) according to any of claims 2 to 7, wherein the top layer (10) is fabricated as a mesh.

9. The multi-layered sheet (5) according to any of claims 2 to 8, wherein the top layer (10) is fabricated from Polyester or modified Polyester.

10. The multi-layered sheet (5) according to any of claims 2 to 9, wherein the top layer (10) is provided with a thickness between 10 µm to 2000 µm, preferably around 700 µm.

11. The multi-layered sheet (5) according to any of claims 2 to 10, wherein the first and the second adhesive layer (16, 18) are respectively provided as synthetic rubber glue sheets.

12. The multi-layered sheet (5) according to any of claims 2 to 11, wherein the bottom layer (14) is fabricated from polyester with a thickness between 10 µm and 300 µm, preferably around 150 µm.

13. A vacuum infusion moulding process, comprising the steps of:
- providing a laminate product;
- placing a multi-layered sheet (5) according to any of claims 1 to 12 above a laminate product with the bottom layer (14) facing the laminate product; and
- placing a further multi-layered sheet (30) comprising a three layer stack including a peeling layer (32), a third adhesive layer (34) and a resin impermeable membrane layer (36) under the laminate product with the peeling layer (32) facing the laminate product.

14. The vacuum infusion moulding process according to claim 13, wherein the peeling layer is fabricated from polyester having a thickness between 10 µm and 300 µm, preferably around 150 µm.

15. The vacuum infusion moulding process according to claim 13 or 14, wherein the membrane layer is fabricated from Polyester having a thickness between 50 and 500 µm, preferably around 200 µm.

## Patentansprüche

1. Eine mehrschichtige Folie (5) für die Vakuum-Infusion-Formung, umfassend
einen Schichtstapel, der luftdurchlässig und steuerbar ist, sodass in einem ersten Zustand ein flüssiges Harz an dem Durchdringen des Schichtstapels gehindert wird und dass in einem zweiten Zustand das flüssige Harz den Schichtstapel zumindest teilweise durchdringen kann, wobei der erste Zustand einer ersten Temperatur entspricht und der zweite Zustand einer zweiten Temperatur entspricht, die oberhalb der ersten Temperatur liegt;
der Schichtstapel umfassend eine mittlere Schicht (12) aufweisend Perforationslöcher (22); wobei die Perforationslöcher (22) einen Durchmesser aufweisen, der klein genug ist, sodass unterhalb der zweiten Temperatur das flüssige Harz am Durchdringen der mittleren Schicht gehindert wird;
der Schichtstapel weiterhin umfassend eine obere Schicht (10), die in der Lage ist das flüssige Harz zu absorbieren; eine untere Schicht (14), die in der Lage ist die Freigabe der mehrschichtigen Folie zu erleichtern, **dadurch gekennzeichnet, dass** die mittlere Schicht (12) einen Schmelzpunkt aufweist, der der zweiten Temperatur entspricht, wobei bei der zweiten Temperatur der Schmelzprozess der mittleren Schicht (12) an den Perforationslöchern (22) beginnt, was zur Folge hat, dass sich die Perforationslöcher (22) aufweiten und eine Penetration des flüssigen Harzes durch die mittlere Schicht (12) erlauben, und dadurch dass der Schichtstapel weiterhin eine erste Haftschicht (16) die die obere Schicht (10) mit der mittleren Schicht (12) verbindet und eine zweite Haftschicht (18) die die mittlere Schicht (12) mit der unteren Schicht (14) verbindet umfasst.

2. Die mehrschichtige Folie (5) nach Anspruch 1, wobei die Perforationslöcher (22) in einem regelmäßigen Muster angeordnet sind.

3. Die mehrschichtige Folie (5) nach Anspruch 1 oder 2, wobei der Durchmesser der einzelnen Perforationslöcher (22) kleiner als 100 µm ist.

4. Die mehrschichtige Folie (5) nach einem der Ansprüche 2 bis 3, wobei die Luftdurchlässigkeit der mittleren Schicht (12) durch die Perforationslöcher (22) erreichbar ist.

5. Die mehrschichtige Folie (5) nach einem der Ansprüche 1 bis 4, wobei die zweite Temperatur zwischen 100°C und 150°C auswählbar ist, vorzugsweise bei etwa 120°C.

6. Die mehrschichtige Folie (5) nach einem der Ansprüche 2 bis 5, wobei die mittlere Schicht (12) aus einem Polyäthylen oder modifizierten Polyäthylen hergestellt ist.

7. Die mehrschichtige Folie (5) nach einem der Ansprüche 2 bis 6, wobei die mittlere Schicht (12) eine Dicke zwischen 10 µm und 100 µm aufweist, vorzugsweise etwa 30 µm.

8. Die mehrschichtige Folie (5) nach einem der Ansprüche 2 bis 7, wobei die obere Schicht (10) als ein Netz gefertigt ist.

9. Die mehrschichtige Folie (5) nach einem der Ansprüche 2 bis 8, wobei die obere Schicht (10) aus einem Polyester oder modifizierten Polyester hergestellt ist.

10. Die mehrschichtige Folie (5) nach einem der Ansprüche 2 bis 9, wobei die obere Schicht (10) eine Dicke zwischen 10 µm und 2000 µm aufweist, vorzugsweise etwa 700 µm.

11. Die mehrschichtige Folie (5) nach einem der Ansprüche 2 bis 10, wobei die erste bzw. die zweite Haftschicht (16, 18) synthetische Gummiklebefolien sind.

12. Die mehrschichtige Folie (5) nach einem der Ansprüche 2 bis 11, wobei die untere Schicht (14) aus Polyester hergestellt ist mit einer Dicke zwischen 10 µm und 300 µm, vorzugsweise etwa 150 µm.

13. Ein Vakuum-Infusion-Formungsverfahren, umfassend die Schritte:
- Bereitstellen eines Laminaterzeugnisses;
- Platzieren einer mehrschichtigen Folie (5) nach einem der Ansprüche 1 bis 12 über das Laminatprodukt mit der unteren Schicht (14) dem Laminatprodukt zugewandt; und
- Platzieren einer weiteren mehrschichtigen Folie (30) umfassend einen dreischichtigen Stapel aufweisend eine Ablöseschicht (32), eine dritte Haftschicht (34) und eine harzundurchlässige Membranschicht (36) unter das Laminatprodukt mit der Ablöseschicht (32) dem Laminatprodukt zugewandt.

14. Das Vakuum-Infusion-Formungsverfahren nach Anspruch 13, wobei die Ablöseschicht (32) aus einem Polyester hergestellt ist mit einer Dicke zwischen 10 µm und 300 µm, vorzugsweise etwa 150 µm.

15. Vakuum-Infusion-Formungsverfahren nach Anspruch 13 oder 14, wobei die Membranschicht (36) aus einem Polyester hergestellt ist mit einer Dicke zwischen 50 µm und 500 µm, vorzugsweise etwa 200 µm.

## Revendications

1. Feuille multicouche (5) pour un moulage par infusion sous vide comprenant
un empilement de couches étant perméable à l'air et pouvant être commandé de sorte que dans un premier état la transmission d'une résine liquide à travers l'empilement de couches soit bloquée et que dans un deuxième état la résine liquide puisse pénétrer au moins partiellement à travers l'empilement de couches, où le premier état correspond à une première température et le deuxième état correspond à une deuxième température qui est supérieure à la première température ;
l'empilement de couches comportant une couche intermédiaire (12) ayant des trous de perforation (22) ;
dans laquelle les trous de perforation (22) sont pourvus d'un diamètre qui est suffisamment petit pour qu'en dessous de la deuxième température, la résine liquide soit empêchée de pénétrer à travers la couche intermédiaire ;
dans laquelle l'empilement de couches comporte en outre une couche supérieure (10) qui est capable d'absorber la résine liquide, une couche inférieure (14) qui est capable de faciliter une libération de la feuille multicouche (5), **caractérisée en ce que** la couche intermédiaire (12) présente un point de fusion qui correspond à la deuxième température, où à la deuxième température le procédé de fusion de la couche intermédiaire (12) commence autour des trous de perforation amenant les trous de perforation à s'élargir et permettant la pénétration de la résine liquide à travers la couche intermédiaire, et **en ce que** l'empilement de couches comporte en outre une première couche d'adhérence (16) qui relie la couche supérieure (10) à la couche intermédiaire (12), et une deuxième couche d'adhérence (18) qui relie la couche intermédiaire (12) à la couche inférieure (14).

2. Feuille multicouche (5) selon la revendication 1, dans laquelle les trous de perforation (22) sont agencés selon un motif régulier.

3. Feuille multicouche (5) selon la revendication 1 ou 2, dans laquelle le diamètre des trous de perforation individuels (22) est inférieur à 100 µm.

4. Feuille multicouche (5) selon l'une des revendications 2 à 3, dans laquelle la perméabilité de la couche intermédiaire (12) à l'air est réalisée par les trous de perforation (22).

5. Feuille multicouche (5) selon l'une des revendications 1 à 4, dans laquelle la deuxième température est choisie comprise entre 100°C et 150°C, de préférence à environ 120°C.

6. Feuille multicouche (5) selon l'une des revendications 2 à 5, dans laquelle la couche intermédiaire (12) est fabriquée à partir du Polyéthylène ou du Polyéthylène modifié.

7. Feuille multicouche (5) selon l'une des revendications 2 à 6, dans laquelle la couche intermédiaire (12) est pourvue d'une épaisseur comprise entre 10 µm et 100 µm, de préférence d'environ 30 µm.

8. Feuille multicouche (5) selon l'une des revendications 2 à 7, dans laquelle la couche supérieure (10) est fabriquée sous forme de maille.

9. Feuille multicouche (5) selon l'une des revendications 2 à 8, dans laquelle la couche supérieure (10) est fabriquée à partir du Polyester ou du Polyester modifié.

10. Feuille multicouche (5) selon l'une des revendications 2 à 9, dans laquelle la couche supérieure (10) est pourvue d'une épaisseur comprise entre 10 µm et 2000 µm, de préférence d'environ 700 µm.

11. Feuille multicouche (5) selon l'une quelconque des revendications 2 à 10, dans laquelle les première et deuxième couches adhésives (16, 18) sont prévues respectivement sous forme de feuilles de colle en caoutchouc synthétique.

12. Feuille multicouche (5) selon l'une des revendications 2 à 11, dans laquelle la couche inférieure (14) est fabriquée à partir du polyester avec une épaisseur comprise entre 10 µm et 300 µm, de préférence d'environ 150 µm.

13. Procédé de moulage par infusion sous vide, comprenant les étapes qui consistent:
- à fournir un produit stratifié ;
- à placer une feuille multicouche (5) selon l'une des revendications 1 à 12 au-dessus d'un produit stratifié avec la couche inférieure (14) faisant face au produit stratifié ; et
- à placer une feuille multicouche supplémentaire (30) comprenant un empilement à trois couches comportant une couche de pelage (32), une troisième couche adhésive (34) et une couche de membrane imperméable à la résine (36) sous le produit stratifié avec la couche de pelage (32) faisant face au produit stratifié.

14. Procédé de moulage par infusion sous vide selon la revendication 13, dans lequel la couche de pelage est fabriquée à partir du polyester ayant une épaisseur comprise entre 10 µm et 300 µm, de préférence d'environ 150 µm.

15. Procédé de moulage par infusion sous vide selon la revendication 13 ou 14, dans lequel la couche de membrane est fabriquée à partir du Polyester ayant une épaisseur comprise entre 50 et 500 µm, de préférence d'environ 200 µm.
